# FASCICULE DE BREVET EUROPEEN

(11) **EP 3 317 495 B1**
(45) Date de publication et mention de la délivrance du brevet: **03.11.2021**
(21) Numéro de dépôt: 16741362.4
(22) Date de dépôt: 01.07.2016
(51) Int. Cl.: F01D 5/18

(54) **AUBE DE TURBINE À BORD DE FUITE PRÉSENTANT DES MÉPLATS**
TURBINENSCHAUFEL MIT ABFLACHUNGEN AN DER HINTERKANTE
TURBINE BLADE WITH TRAILING EDGE HAVING FLATS

(30) Priorité: 02.07.2015 FR 1556276
(43) Date de publication de la demande: 09.05.2018
(73) Titulaire: Safran Aircraft Engines, 75015 Paris (FR)
(72) Inventeur: COUDERT, Laurent, Patrick, Robert, 77550 Moissy Cramayel (FR); BOTREL, Erwan, Daniel, 77550 Moissy Cramayel (FR)
(74) Mandataire: Brevalex
(86) Numéro de dépôt international: PCT/FR2016/051666
(87) Numéro de publication internationale: WO 2017/001801

(56) Documents cités:
- EP-A1- 2 320 029
- US-B1- 6 190 129

## Description

### DOMAINE TECHNIQUE

L'invention concerne une aube de turbomachine, notamment une aube de turbine, comportant des perçages formés au niveau du bord de fuite de l'aube et qui débouchent dans une cavité interne de l'aube.

L'invention concerne plus particulièrement une aube pour laquelle le bord de fuite est configuré pour limiter les pertes aérodynamiques

### ÉTAT DE LA TECHNIQUE ANTÉRIEURE

Certaines aubes d'une turbomachine, et plus particulièrement les aubes mobiles de la turbine, sont sujettes à de nombreuses sollicitations thermiques provenant des gaz très chauds issus de la chambre de combustion.

Les aubes comportent à cet effet un circuit de ventilation interne par lequel un flux d'air frais circule au travers de l'aube, pour la refroidir.

L'aube comporte ainsi une ou plusieurs cavités internes et des perçages débouchant dans le bord de fuite de l'aube, pour évacuer l'air frais. Des exemples d'aubes de ce type sont divulgués dans les documents EP2320029 A1 et US6190129 B1.

L'optimisation du fonctionnement de la turbomachine impose que le bord de fuite de l'aube ait un rayon de courbure qui soit le plus faible possible.

Par contre, un tel rayon de courbure rend difficile la réalisation des perçages.

Au contraire, un bord de fuite ayant un rayon de courbure important facilite la réalisation des perçages mais réduit le rendement de la turbine du fait de la présence de perturbations au niveau du bord de fuite.

L'invention a pour but de proposer une aube de turbomachine réalisée pour concilier ces deux exigences.

### EXPOSÉ DE L'INVENTION

L'invention propose une aube de turbomachine comportant un corps creux délimitant une cavité, et comportant un bord de fuite aval, l'aube comportant en outre au moins un perçage qui communique avec la cavité et qui débouche vers l'aval dans le bord de fuite, le bord de fuite s'étendant selon la direction principale radiale de l'aube, et comportant une face aval convexe, caractérisée en ce que chaque perçage débouche dans une face arrière plane d'un méplat formé dans la face aval convexe du bord de fuite.

Cette face aval permet de faciliter l'opération de perçage dans le bord de fuite. De plus, la présence de plusieurs faces planes dans le bord de fuite, qui sont localisées au niveau des perçages n'implique que de faibles pertes aérodynamiques.

De préférence, la face arrière est sensiblement perpendiculaire à la direction principale du perçage associé.

De préférence, le bord de fuite comporte des tronçons répartis radialement de part et d'autre de chaque méplat, dont les faces aval des tronçons forment la face aval convexe du bord de fuite.

De préférence, la face arrière de chaque méplat est délimitée radialement par les faces d'extrémité radiale des tronçons.

De préférence, chaque face d'extrémité radiale des tronçons est inclinée par rapport à un plan radial d'un angle (a) dont la valeur est comprise entre 45 et 90 degrés inclus.

De préférence, chaque méplat est associé à un perçage.

De préférence, tous les méplats ont une même hauteur radiale.

De préférence, plusieurs perçages débouchent dans la face arrière d'un même méplat.

De préférence, la hauteur radiale de chaque méplat est définie en fonction du nombre de perçages qui débouchent dans ledit méplat.

De préférence, le bord de fuite comporte des tronçons répartis radialement de part et d'autre de chaque méplat, dont les faces aval des tronçons forment la face aval convexe du bord de fuite.

L'invention concerne aussi une turbomachine d'aéronef comportant un rotor de turbine muni d'aubes telles que définies précédemment.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique d'une partie de turbine d'aéronef comportant des aubes réalisées selon l'invention
- la figure 2 est un détail en perspective du bord de fuite d'une aube représentée à la figure 1
- la figure 3 est une section d'une aube représentée à la figure 1 selon un plan principal radial de l'aube
- la figure 4 est une section de l'aube représentée à la figure 3, selon un plan passant par un perçage de l'aube.

### EXPOSÉ DÉTAILLÉ DE MODES DE RÉALISATION PARTICULIERS

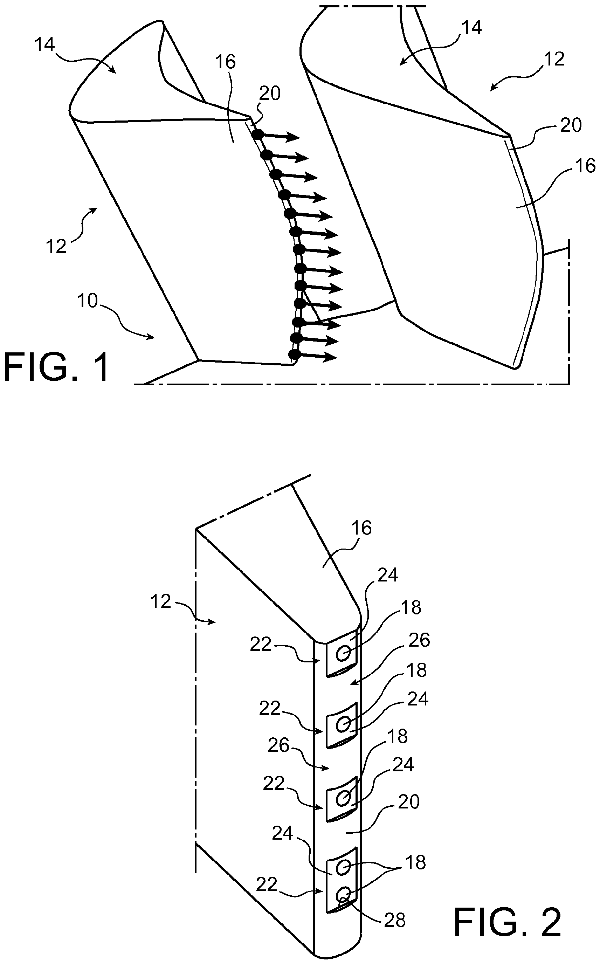

On a représenté à la figure 1 une partie d'un rotor 10 de turbomachine, dans laquelle deux aubes 12 sont représentées. A titre d'exemple non limitatif, cette partie est une partie de la turbine haute pression de la turbomachine.

Chaque aube 12 coopère avec des gaz chauds provenant de la chambre de combustion de la turbomachine et elle est par conséquent portée à une température élevée lors du fonctionnement de la turbomachine.

Pour réduire son échauffement, l'aube 12 comporte un corps creux délimitant une ou plusieurs cavités 14 dans chacune desquelles un flux d'air frais circule. Aussi, pour refroidir son bord de fuite 16, l'aube 12 comporte une pluralité de perçages 18 qui s'étendent depuis une cavité et qui débouchent au niveau du bord de fuite 16.

Chaque perçage 18 est réalisé lors d'une opération de perçage, après la réalisation par moulage de l'aube 12. Pour cela, l'outil de perçage est mis en contact avec la face aval 20 du bord de fuite 16.

Le mode de réalisation de l'aube 12, par moulage, et l'optimisation de l'écoulement du flux de gaz chaud au niveau du bord de fuite 16 ont pour conséquence que la section de la face aval 20 du bord de fuite 16, selon un plan perpendiculaire à la direction principale radiale de l'aube, est de forme arrondie, convexe et bombée vers l'aval. De plus, le rayon de courbure de cette face aval 20 est le plus faible possible pour limiter les perturbations aérodynamiques au niveau du bord de fuite.

Le début du perçage sur une surface arrondie étant relativement difficile, le bord de fuite 16 comporte plusieurs méplats 22, dont chaque méplat 22 est situé au niveau d'un perçage 18.

Chaque méplat 22 comporte une face arrière 24 sensiblement perpendiculaire à l'axe principal du perçage 18 associé au méplat 22. Cette face arrière 24 est située en retrait par rapport à la face aval 20 du bord de fuite 16.

La face arrière 24 du méplat 22 consiste en une surface plane facilitant l'opération de perçage puisque l'outil a moins de risque de dévier par rapport à la position désirée du perçage 18.

Chaque méplat 22 est situé radialement entre deux tronçons 26 du bord de fuite 16 dont la face aval de ces tronçons 26 forme la face aval 20 du bord de fuite.

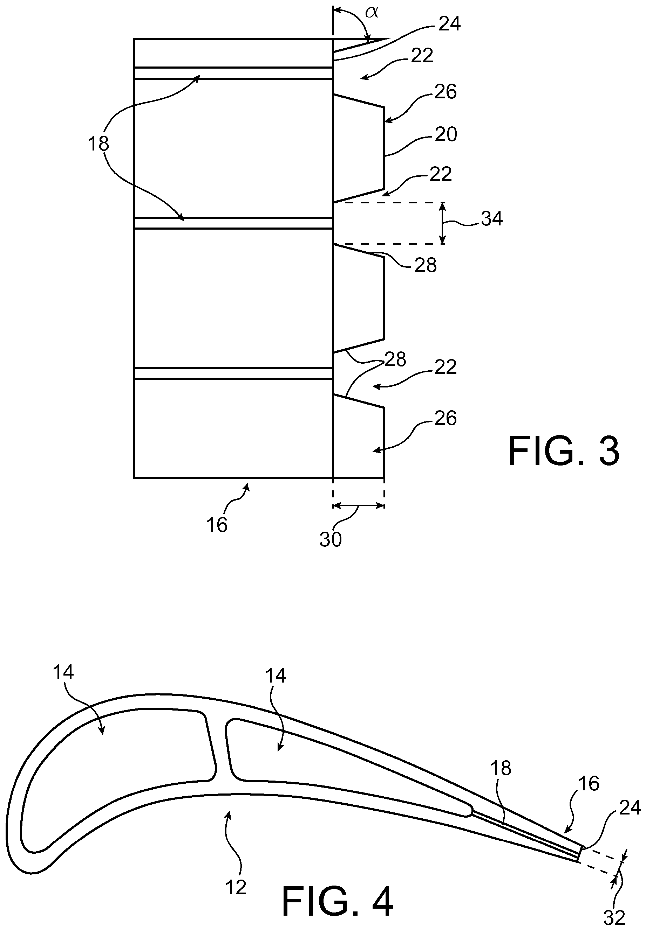

Les tronçons 26 comportent des faces d'extrémité radiale 28, qui délimitent radialement les méplats 22 et donc la face arrière 24 de chaque méplat 22. Selon le mode de réalisation représenté à la figure 3, les faces d'extrémité radiale 28 des tronçons 26 sont inclinées par rapport à la perpendiculaire au méplat 22 associé. Un méplat 22 qui est délimité par deux de ces faces 28 est donc en forme de chanfrein, dont la largeur radiale augmente en s'éloignant de la face arrière 24.

Il sera compris que l'invention n'est pas limitée à ce mode de réalisation et que les faces d'extrémité radiale 28 des tronçons 26 peuvent être perpendiculaires au méplat 22 associé.

D'une manière générale, chaque face d'extrémité radiale 28 est inclinée par rapport à un plan radial passant par chaque méplat 22 d'un angle α dont la valeur est comprise entre 45 et 90 degrés inclus.

Selon le mode de réalisation représenté aux figures, chaque méplat 22 est associé à un seul perçage 18. Cependant, il sera compris que l'invention n'est pas limitée à ce mode de réalisation et qu'un méplat 22 peut être associé à plusieurs perçages 18, c'est-à-dire que plusieurs perçages peuvent déboucher dans la face arrière 22 d'un même méplat 22.

Cette variante de réalisation est avantageuse lorsque les différents perçages 18 qui débouchent dans le même méplat 22 sont situés à proximité les uns des autres.

Les dimensions de chaque méplat 22 sont définies pour permettre de réaliser chacun des perçages 18. Pour cela, la profondeur 30 du méplat 22, qui est la distance entre la partie la plus en aval de la face aval 20 du bord de fuite 16 et la face arrière 24 du méplat, est définie en fonction des dimensions générales du bord de fuite 16 pour obtenir une largeur 32 suffisante de la face arrière 24 (figure 4).

Il en est de même concernant la hauteur radiale du méplat 22 qui définit la hauteur de sa face arrière 24. De préférence, la hauteur radiale de chaque méplat 22 est définie en fonction du nombre de perçages 18 qui débouchent dans ledit méplat 22. Et les méplats 22 d'une même aube 12 peuvent avoir plusieurs hauteurs radiales différentes.

Par exemple, selon le mode de réalisation représenté à la figure 2, le méplat 22 situé radialement à proximité du pied de l'aube 12 est associé à deux perçages 18, et chacun des autres méplats 22 est associé à un seul perçage 18. Aussi, la hauteur radiale du méplat 22 situé radialement à proximité du pied de l'aube 12 est supérieure à la hauteur radiale des autres méplats.

La hauteur radiale de chaque tronçon 26 du bord de fuite 16 est déterminée en fonction de la dimension radiale de la face arrière de chaque méplat, ainsi qu'en fonction de la distance radiale entre les perçages 18.

En tout état de cause, la largeur 32 et la hauteur 34 de la face arrière 24 du méplat doivent être les plus faibles possibles pour que les perturbations aérodynamiques produites sur le bord de fuite 16 au niveau de chaque méplat 22 soient les moins importantes possibles, tout en permettant la réalisation de chaque perçage.

Par ailleurs, les turbulences aérodynamiques, dites pertes de culot, qui se forment au niveau de chaque face arrière d'un méplat 22 sont réduites par l'injection d'air dans le méplat 22, lors du refroidissement de la pale.

## Revendications

1. Aube (12) de turbomachine comportant un corps creux délimitant une cavité(14), et comportant un bord de fuite aval (16),
l'aube (12) comportant en outre au moins un perçage (18) qui communique avec la cavité (14) et qui débouche vers l'aval dans le bord de fuite (16),
le bord de fuite (16) s'étendant selon la direction principale radiale de l'aube (12), et comportant une face aval (20) convexe,
**caractérisée en ce que** chaque perçage (18) débouche dans une face arrière (24) plane d'un méplat (22) formé dans la face aval convexe du bord de fuite (16).

2. Aube (12) de turbomachine selon la revendication précédente, **caractérisée en ce que** la face arrière (24) est sensiblement perpendiculaire à la direction principale du perçage (18) associé.

3. Aube (12) de turbomachine selon l'une quelconque des revendications précédentes, **caractérisée en ce que** le bord de fuite (16) comporte des tronçons (26) répartis radialement de part et d'autre de chaque méplat (22), dont les faces aval des tronçons forment la face aval convexe du bord de fuite (16).

4. Aube (12) de turbomachine selon l'une quelconque des revendications précédentes, **caractérisée en ce que** la face arrière (24) de chaque méplat (22) est délimitée radialement par les faces d'extrémité radiale (28) des tronçons (26).

5. Aube selon la revendication précédente, **caractérisée en ce que** chaque face d'extrémité radiale (28) des tronçons (22) est inclinée par rapport à un plan radial d'un angle (α) dont la valeur est comprise entre 45 et 90 degrés inclus.

6. Aube (12) de turbomachine selon l'une quelconque des revendications précédentes, **caractérisée en ce que** chaque méplat (22) est associé à un perçage (18).

7. Aube (12) de turbomachine selon la revendication précédente, **caractérisée en ce que** tous les méplats (22) ont une même hauteur radiale.

8. Aube (12) de turbomachine selon l'une quelconque des revendications 1 à 5, **caractérisée en ce que** plusieurs perçages (18) débouchent dans la face arrière (24) d'un même méplat (22).

9. Aube (12) de turbomachine selon la revendication précédente, **caractérisée en ce que** la hauteur radiale de chaque méplat (22) est définie en fonction du nombre de perçages (18) qui débouchent dans ledit méplat (22).

10. Turbomachine d'aéronef comportant un rotor (10) de turbine muni d'aubes (12) selon l'une quelconque des revendications précédentes.

## Patentansprüche

1. Turbomaschinenschaufel (12) mit einem Hohlkörper, der einen Hohlraum (14) begrenzt, und mit einer stromabwärtigen Hinterkante (16),
wobei die Schaufel (12) außerdem mindestens eine Bohrung (18) aufweist, die in Verbindung mit dem Hohlraum (14) steht und die stromabwärts in die Hinterkante (16) mündet,
wobei die Hinterkante (16) in der radialen Hauptrichtung der Schaufel (12) verläuft und eine konvexe stromabwärtige Fläche (20) aufweist,
**dadurch gekennzeichnet, dass** jede Bohrung (18) in eine Rückseite (24) mündet, die mit einer in der konvexen stromabwärtigen Fläche der Hinterkante (16) ausgebildeten Abflachung (22) eben ist.

2. Turbomaschinenschaufel (12) nach dem vorhergehenden Anspruch, **dadurch gekennzeichnet, dass** die Rückseite (24) im Wesentlichen senkrecht zur Hauptrichtung der zugeordneten Bohrung (18) verläuft.

3. Turbomaschinenschaufel (12) nach einem der vorhergehenden Ansprüche, **dadurch gekennzeichnet, dass** die Hinterkante (16) Abschnitte (26) aufweist, die radial auf beiden Seiten jeder Abflachung (22) verteilt sind, wobei die stromabwärtigen Flächen der Abschnitte die konvexe stromabwärtige Fläche der Hinterkante (16) bilden.

4. Turbomaschinenschaufel (12) nach einem der vorhergehenden Ansprüche, **dadurch gekennzeichnet, dass** die Rückseite (24) jeder Abflachung (22) radial durch die radialen Endflächen (28) der Abschnitte (26) begrenzt ist.

5. Schaufel nach dem vorhergehenden Anspruch, **dadurch gekennzeichnet, dass** jede radiale Endfläche (28) der Abschnitte (22) bezüglich einer radialen Ebene in einem Winkel (α) geneigt ist, dessen Wert im Bereich von 45 bis einschließlich 90 Grad liegt.

6. Turbomaschinenschaufel (12) nach einem der vorhergehenden Ansprüche, **dadurch gekennzeichnet, dass** jede Abflachung (22) einer Bohrung (18) zugeordnet ist.

7. Turbomaschinenschaufel (12) nach dem vorhergehenden Anspruch, **dadurch gekennzeichnet, dass** alle Abflachungen (22) dieselbe radiale Höhe aufweisen.

8. Turbomaschinenschaufel (12) nach einem der Ansprüche 1 bis 5, **dadurch gekennzeichnet, dass** mehrere Bohrungen (18) in die Rückseite (24) von ein und derselben Abflachung (22) münden.

9. Turbomaschinenschaufel (12) nach dem vorhergehenden Anspruch, **dadurch gekennzeichnet, dass** die radiale Höhe jeder Abflachung (22) in Abhängigkeit der Anzahl von Bohrungen (18) definiert ist, welche in diese Abflachung (22) münden.

10. Flugzeugturbomaschine mit einem Turbinenrotor (10), der mit Schaufeln (12) nach einem der vorhergehenden Ansprüche ausgerüstet ist.

## Claims

1. Turbomachine blade (12) comprising a hollow body defining a cavity (14), and comprising a downstream trailing edge (16),
the blade (12) further comprising at least one hole (18) which communicates with the cavity (14) and which opens downstream onto the trailing edge (16),
the trailing edge (16) extending along the main radial direction of the blade (12), and comprising a downstream convex face (20),
**characterised in that** each hole (18) opens onto a planar rear face (24) of a flat region (22) formed in the downstream convex face of the trailing edge (16).

2. Turbomachine blade (12) as claimed in the preceding claim, **characterised in that** the rear face (24) is substantially perpendicular to the main direction of the associated hole (18).

3. Turbomachine blade (12) as claimed in any preceding claim, **characterised in that** the trailing edge (16) comprises segments (26) radially distributed on either side of each flat region (22), of which the downstream faces of the segments form the downstream convex face of the trailing edge (16).

4. Turbomachine blade (12) as claimed in any preceding claim, **characterised in that** the rear face (24) of each flat region (22) is defined radially by the radial end faces (28) of the segments (26).

5. Blade as claimed in the preceding claim, **characterised in that** each radial end face (28) of the segments (22) is inclined with respect to a radial plane by an angle (α) of which the value is between 45 and 90 degrees inclusive.

6. Turbomachine blade (12) as claimed in any preceding claim, **characterised in that** each flat region (22) is associated with a hole (18).

7. Turbomachine blade (12) as claimed in the preceding claim, **characterised in that** all the flat regions (22) have the same radial height.

8. Turbomachine blade (12) according to any of claims 1 to 5, **characterised in that** several holes (18) open onto the rear face (24) of the same flat region (22).

9. Turbomachine blade (12) as claimed in the preceding claim, **characterised in that** the radial height of each flat region (22) is defined according to the number of holes (18) which open onto said flat region (22).

10. Aircraft turbomachine comprising a turbine rotor (10) provided with blades (12) as claimed in any preceding claim.
